# EUROPEAN PATENT SPECIFICATION

(11) **EP 3 042 700 B1**
(45) Date of publication and mention of the grant of the patent: **20.11.2019**
(21) Application number: 15203236.3
(22) Date of filing: 31.12.2015
(51) Int. Cl.: A63B 22/02, B32B 5/02, B32B 9/02, B32B 3/10, B32B 3/14

(54) **A BUFFER BOARD STRUCTURE OF A TREADMILL**
PUFFERPLATTENSTRUKTUR EINES LAUFBANDS
STRUCTURE D'AMORTISSEMENT D'UN TAPIS ROULANT

(30) Priority: 06.01.2015 CN 201510003185
(43) Date of publication of application: 13.07.2016
(73) Proprietor: Chang, Chung Fu, Changhua County (TW)
(72) Inventor: Chang, Chung Fu, Changhua County (TW)
(74) Representative: Lang, Christian

(56) References cited:
- WO-A1-2005/021256
- US-A- 4 810 551
- US-A1- 2011 111 166

## Description

### BACKGROUND OF THE INVENTION

### 1. Field of the Invention

This invention relates to an application of a treadmill and relates particularly to a buffer board structure of a treadmill.

### 2. Description of the Related Art

Generally, a treadmill uses a buffer board as a support below a belt. Because a quite large treading force is imparted to the buffer board when a user runs the treadmill, no buffer bounce will make the user quite uncomfortable. In this regard, it is common to install a buffer cushion and a buffer mechanism under the buffer board, stick a foam layer to the buffer board and then stick a woven layer to the foam layer. The aforesaid arrangement allows the belt to operate smoothly and provides a buffering effect with comfort.

However, the user easily treads on a same position and repeats his treading action, and in the long term this problem may cause the foam layer to collapse permanently. This collapse renders the foam layer unable to retrieve and lose the buffering effect.

This novel invention is made to improve a prior art issued by Taiwan patent No. TWI406686, and this invention and the prior art have the common inventor. The prior art comprises a treadmill buffer board which includes bamboo strips having the appropriate thickness and width. The bamboo strips are classified into longitudinal bamboo strips and latitudinal bamboo strips . At least one longitudinal bamboo strip and at least one latitudinal bamboo strip can be crossed each other and woven into a woven bamboo plywood board. The bamboo plywood board can be superimposed by a desired thickness to construct a woven bamboo laminated plywood board, thereby enhancing the strength and keeping the buffer bounce. Further, the prior art can directly put the longitudinal bamboo strips which are attached side by side over the latitudinal bamboo strip which are attached side by side to construct a stacking bamboo plywood board.

The aforesaid structures are all made of bamboo. After the prior art makes the bamboo laminated plywood board by weaving or superimposing or mixes the aforesaid two kinds of bamboo plywood boards, gaps formed between contact faces of the adjacent bamboo laminated plywood boards are uneven. Thus, distinct gap sizes are obviously formed when adhesives are laid on the contact faces. These gap sizes need to be filled in by adhesives. When the adhesives dry and solidify, the adhesives at respective adhesive positions between the bamboo laminated plywood boards have different amount of dryness and solidification. This situation causes the bamboo laminated plywood boards to have more rigidity and causes an uneven treading buffer. If this structure is applied to a buffer board of a treadmill, the buffering effect will be decreased.

The aforesaid bamboo laminated plywood boards are mainly put one over another and attached by adhesives. When the plywood board is trodden to create a buffer effect, the dryness and solidification causes the adhesives to split easily and the direct contact between the adjacent plywood boards creates friction and incurs noises.

The weaving or superimposing process of bamboo sheets may take time and require a larger amount of adhesives to fill in the larger gaps so that bamboo laminated plywood boards can be completed. This, however, cannot save costs.

Patent application US 2011/0111166 A1 discloses a buffer board for a treadmill comprising at least one woven bamboo plate and at least one laminated bamboo board or a combination thereof. The bamboo strips of the woven bamboo plate cross each other such that they form a web structure. The layers of the laminated bamboo board consist each of parallel arranged bamboo strips and are stacked, so that the orientation of the bamboo strips of one layer is perpendicular to the orientation of the bamboo strips of the other layer.

From US patent US 4,810,551 A a bamboo board is known which comprises longitudinal layers and lateral layers. The terms longitudinal and lateral refer to the orientation of bamboo strips in the layers. The angle between longitudinal and lateral bamboo strips is 90 degrees. The longitudinal and lateral layers are stacked alternately.

### SUMMARY OF THE INVENTION

It is an object of this invention to provide a buffer board structure for a treadmill which puts a membrane layer between two adjacent bamboo layers and places bamboos sheets of the adjacent bamboo layers over one another toward a same juxtaposing direction, thereby increasing a buffering effect of the buffer board structure. An adhesive is applied to stick the membrane layer to the multiple juxtaposing bamboo sheets to prevent noises because of friction caused by a direct contact between the bamboo layers when users run the treadmill. With the aid of flexibility of the bamboo layers and a firm adhesion brought about by the membrane layer, a buffering effect can be promoted and a breakdown between the bamboo sheets and between the bamboo layers can be prevented.

Therefore, a buffer board structure for a treadmill in accordance with this invention is provided to solve the aforesaid problems. The buffer board structure according to the invention has the features of claim 1. Further embodiments are subject-matter of the dependent claims. The buffer board structure is installed under a belt of the treadmill. While being trodden, the belt comes into contact with the buffer board structure. The structure includes a plurality of bamboo layers having respective bamboo sheets which are put one over another and placed side by side toward a same direction. Preferably, a direction where the juxtaposed bamboo sheets are directed is identical to a direction where the treadmill runs. The structure further includes a plurality of membrane layers, each of which is laid between two adjacent bamboo layers. The structure further includes an adhesive arranged between each membrane layer and each bamboo layer so that the adjoining bamboo layer and membrane layer can stick together as a whole. The structure further includes a slip resistant layer adhered to an upper surface of the top bamboo layer.

The bamboo layers are made of multiple strips of bamboo sheets parallel to each other.

In the preferred embodiments, the membrane layer can be a whole wood sheet, a combination of wooden laminating sheets, a woven cloth, a non-woven cloth, a whole plastic sheet or a combination of plastic laminating sheets.

The advantages of this invention are more apparent upon reading following descriptions of the preferred embodiment in conjunction with accompanying drawings.

Parts or the arrangement of parts of this invention may be varied. The adopted preferred embodiment of this invention will be described in detail and shown in the drawings.

### BRIEF DESCRIPTION OF THE DRAWINGS

Fig. 1 is an exploded view showing a buffer board structure of a treadmill of this invention;
Fig. 2 is a schematic view showing the buffer board structure of this invention in combination;
Fig. 3 is a cross-sectional view showing the buffer board structure of this invention;
Fig. 4 is a perspective view showing the buffer board structure of this invention; and
Fig. 5 is a perspective view showing the buffer board structure of this invention; and

### DETAILED DESCRIPTION OF THE PREFERRED EMBODIMENTS

To attain the aforesaid feature and objects, this invention is described by following descriptions of the preferred embodiment with the accompanying drawings.

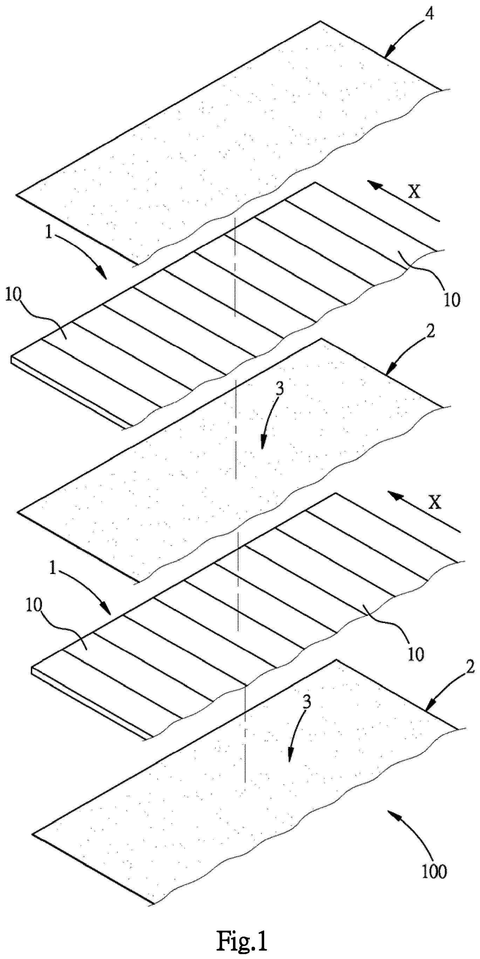

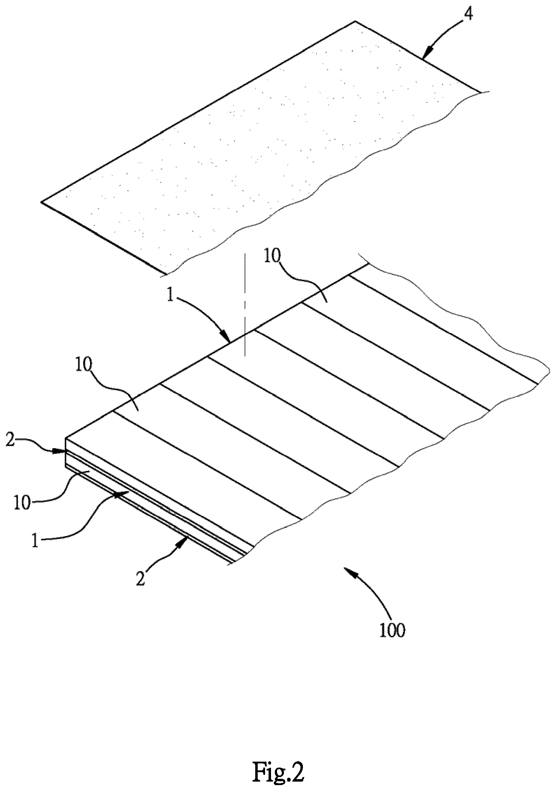

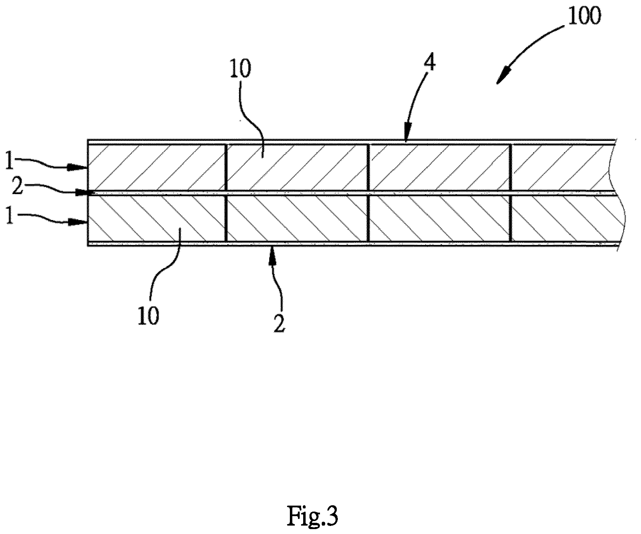

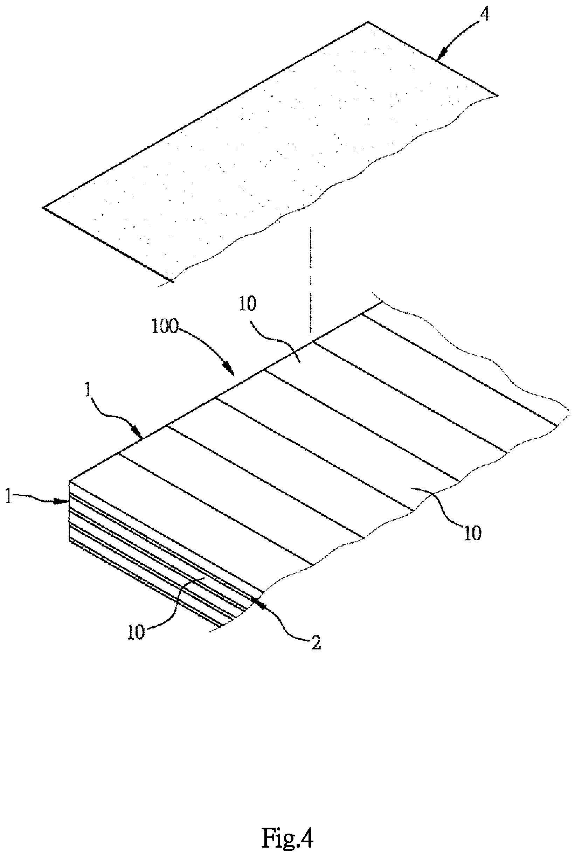

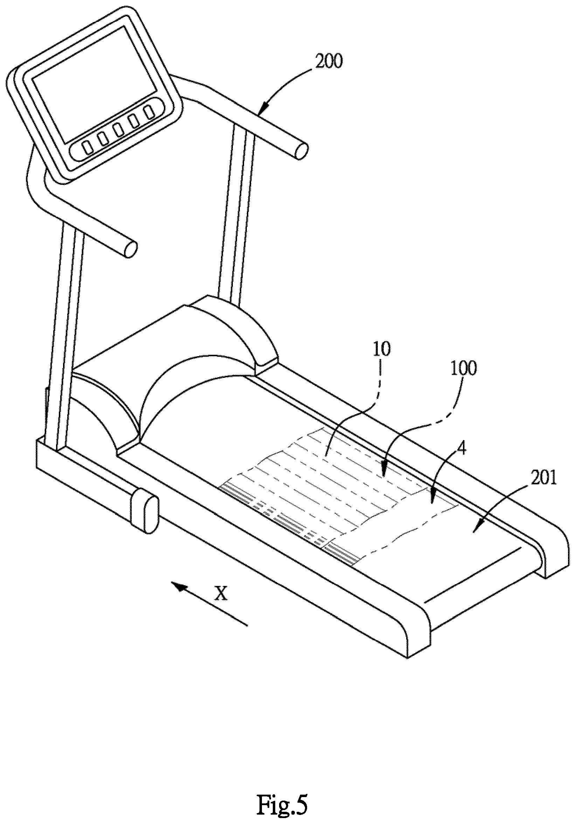

Fig. **1** is an exploded view showing a buffer board structure of a treadmill of this invention. Fig. **2** is a schematic view showing the buffer board structure of this invention in combination. Fig. **3** is a cross-sectional view showing the buffer board structure of this invention. Fig. **4** is a perspective view showing the buffer board structure of this invention. Fig. **5** is a perspective view showing a treadmill in combination with the buffer board structure of this invention.

A buffer board structure **100** of this invention is installed under a belt **201** of a treadmill **200.** When the belt **201** is trodden and subjects the buffer board structure **100** to a downward impact, a buffer bounce is created. The buffer board structure **100** comprises a plurality of bamboo layers **1** and a plurality of membrane layers **2.**

The bamboo layers **1** are put one over another to form a superimposing arrangement. The adjacent bamboo layers **1** are superimposed along an axial direction.

Further, each bamboo layer **1** is made of a plurality of bamboo sheets **10** parallel to each other. Referring to Fig. **1****,** the bamboo sheets **10** of the bamboo layer **1** at a top position define an axial direction **"X".** The bamboo sheets **10** of the bamboo layer **1** at a middle position also define the same axial direction **"X".** The axial direction **"X"** can be parallel to a running direction of the treadmill **200.** Therefore, the use of the structure can attain the best flexibility to provide a preferable shock-absorbing capability and promote a buffering effect.

Each of the membrane layers **2** is laid between the two adjacent bamboo layers **1.** The membrane layer **2** can be, but not limited to, a whole wood sheet, a combination of wooden laminating sheets, a woven cloth, a non-woven cloth, a whole plastic sheet or a combination of plastic laminating sheets.

An adhesive **3** can be arranged between each membrane layer **2** and each bamboo layer **1** so that the adjoining bamboo layer **1** and membrane layer **2** can stick together as a whole.

Further, a slip resistant layer **4** is laid on an upper surface of the bamboo layer **1** situated at the top position. Thus, when a user treads on the belt **201** of the treadmill **200,** the slip resistant layer **4** helps reduce the contact resistance between the user and the belt **201** and prevents the breakdown of the bamboo sheets of the top bamboo layer **1.**

From above, this invention puts a membrane layer **2** between two adjacent bamboo layers **1,** so contact faces of the bamboo layers **1** and the membrane layer **2** which are adhered together become smoother and the adhesive **3** fills in a gap more evenly. The slip resistant layer **4** is stuck on the top bamboo layer **1.** Thus, this invention provides the bamboo layers **1** with a smoother buffer bounce and a stable juxtaposing concatenation during the treading and sinking action, thereby promoting a buffering effect of the buffer board structure of this invention and preventing the breakdown of the buffer relations between the bamboo sheets **10** of the bamboo layers **1** and the membrane layers **2.**

## Claims

1. A buffer board structure for a treadmill being installable under a belt (201) of said treadmill (200) and applicable to create a buffering effect when said belt (201) is trodden to sink and impact on said buffer board structure (100), wherein said buffer board structure comprises a plurality of bamboo layers (1) which are placed one over another, each of said bamboo layers (1) including a plurality of bamboo sheets (10) attached side by side along an axial direction (X)
**characterized in that**
said bamboo sheets (10) of any two of said adjacent bamboo layers (1) being parallel to each other along said axial direction (X),
wherein the buffer board structure (100) further comprises
a plurality of membrane layers (2), each of said membrane layers (2) being laid between said two adjacent bamboo layers (1),
an adhesive (3) arranged between each of said membrane layers (2) and each of said bamboo layers (1) to adhere said bamboo layers (1) to said membrane layers (2) and
a slip resistant layer (4) adhered to an upper surface of one of said bamboo layers (1) which is placed at a top position.

2. The buffer board structure of the treadmill as claimed in claim 1, wherein said membrane layer (2) is a whole wood sheet or is made by laminating wood sheets.

3. The buffer board structure of the treadmill as claimed in claim 1, wherein said membrane layer (2) is a whole plastic sheet or is made by laminating plastic sheets.

4. The buffer board structure of the treadmill as claimed in claim 1, wherein said membrane layer (2) is a woven cloth or a non-woven cloth.

## Patentansprüche

1. Pufferplattenstruktur eines Laufbands, die unter einem Band (201) des Laufbands (200) installierbar ist und anwendbar ist, um einen Puffereffekt zu erzeugen, wenn der Band (201) betreten wird, um einzusinken und auf die Pufferplattenstruktur (100) zu wirken, wobei die Pufferplattenstruktur eine Mehrzahl an Bambusschichten (1) umfasst, die übereinander angeordnet sind, wobei jede der Bambusschichten (1) eine Vielzahl an Bambusblättern (10) umfasst, die Seite an Seite entlang einer axialen Richtung (X) angeordnet sind,
**dadurch gekennzeichnet, dass**
die Bambusblätter (10) von zwei beliebigen der benachbarten Bambusschichten (1) parallel zueinander entlang der axialen Richtung (X) sind,
wobei die Pufferplattenstruktur (100) ferner umfasst:
eine Vielzahl an Membranschichten (2), wobei jede der Membranschichten (2) zwischen die zwei benachbarten Bambusschichten (1) gelegt ist, wobei ein Klebstoff (3) zwischen jeder der Membranschichten (2) und jeder der Bambusschichten (1) angeordnet ist, um die Bambusschichten (1) an die Membranschichten (2) zu kleben und wobei
eine rutschhemmende Schicht (4) an eine Oberseite von einer der Bambusschichten (1) geklebt ist, die an einer oberen Position angeordnet ist.

2. Pufferplattenstruktur eines Laufbands gemäß Anspruch 1, bei der die Membranschicht (2) ein ganzes Holzblatt ist oder durch das Laminieren von Holzblättern hergestellt ist.

3. Pufferplattenstruktur eines Laufbands gemäß Anspruch 1, bei der die Membranschicht (2) ein ganzes Plastikblatt ist oder durch das Laminieren von Plastikblättern hergestellt ist.

4. Pufferplattenstruktur eines Laufbands gemäß Anspruch 1, bei der die Membranschicht (2) ein gewebtes Tuch oder ein nicht-gewebtes Tuch ist.

## Revendications

1. Structure d'amortissement pour un tapis roulant pouvant être installée sous une courroie (201) dudit tapis roulant (200) et pouvant être appliquée pour créer un effet d'amortissement lorsque ladite courroie (201) est piétinée pour s'enfoncer et percuter ladite structure d'amortissement (100), dans laquelle ladite structure d'amortissement comprend une pluralité de couches de bambou (1) qui sont placées l'une sur l'autre, chacune desdites couches de bambou (1) incluant une pluralité de feuilles de bambou (10) attachées côte à côte le long d'une direction axiale (X),
**caractérisée en ce que**
lesdites feuilles de bambou (10) de deux quelconques desdites couches de bambou adjacentes (1) étant parallèles l'une à l'autre le long de ladite direction axiale (X), dans laquelle la structure d'amortissement (100) comprend en outre une pluralité de couches de membrane (2), chacune desdites couches de membrane (2) étant posée entre lesdites deux couches de bambou adjacentes (1), un adhésif (3) agencé entre chacune desdites couches de membrane (2) et chacune desdites couches de bambou (1) pour coller lesdites couches de bambou (1) auxdites couches de membrane (2) et
une couche résistante au glissement (4) collée à une surface supérieure de l'une desdites couches de bambou (1) qui est placée dans une position supérieure.

2. Structure d'amortissement du tapis roulant selon la revendication 1, dans laquelle ladite couche de membrane (2) est une planche en bois entière ou est faite en stratifiant des planches en bois.

3. Structure d'amortissement du tapis roulant selon la revendication 1, dans laquelle ladite couche de membrane (2) est une feuille de plastique entière ou est faite en stratifiant des feuilles de plastique.

4. Structure d'amortissement du tapis roulant selon la revendication 1, dans laquelle ladite couche de membrane (2) est un tissu tissé ou un tissu non tissé.
